# EUROPEAN PATENT APPLICATION

(11) **EP 3 832 639 A1**
(43) Date of publication of application: **09.06.2021**
(21) Application number: 20196906.0
(22) Date of filing: 18.09.2020
(51) Int. Cl.: G09G 5/00, H01R 13/58, H01R 13/64, H01R 13/642, H01R 29/00

(54) **ELECTRONIC DEVICE**

(30) Priority: 06.12.2019 JP 2019221614
(71) Applicant: Toshiba TEC Kabushiki Kaisha, Tokyo 141-8562 (JP)
(72) Inventor: Yamane, Yoichi, Tokyo, 141-8562 (JP)
(74) Representative: Hoffmann Eitle

(57) **Abstract**

According to one embodiment, an electronic device includes a connector, a first determination unit, and a first switching unit. The connector includes a plurality of terminals for being electrically connected to a peripheral device. The first determination unit determines whether or not a peripheral device compatible with an own device is connected to the connector, based upon an electrical state of a terminal that is not used in a terminal configuration of the own device among the plurality of terminals. The first switching unit is provided on a transmission line connecting the terminal of the connector and an electric circuit of the own device, electrically connects the transmission line when the first determination unit determines that the peripheral device compatible with the own device is connected, and electrically disconnects the transmission line when the first determination unit determines that a non-compatible peripheral device is connected.

## Description

### CROSS-REFERENCE TO RELATED APPLICATION

This application is based upon and claims the benefit of priority from Japanese Patent Application No. 2019-221614, filed in December 6, 2019, the entire contents of which are incorporated herein by reference.

### FIELD

Embodiments described herein relate generally to an electronic device and a connection method.

### BACKGROUND

In a POS terminal of a related art, a technology referred to as low voltage differential signaling (LVDS) is adopted for a graphic interface that processes a display signal. However, since LVDS will not be supported in the future, a change to a USB Type-C standard is considered. Specifications of the graphic interface are changed to the USB Type-C standard, whereby a general-purpose connector (a receptacle) and a general-purpose plug cable that comply with the standard can be used for a transmission unit of the display signal.

Meanwhile, a POS display device is provided with a touch panel as well as a display. A control signal of the touch panel passes through the general-purpose plug cable that connects a control unit main body of the POS terminal and the POS display device together with the display signal. Therefore, a terminal of the general-purpose connector that connects the general-purpose plug cable has a terminal configuration unique to the POS terminal, and is different from a standard terminal configuration of the USB Type-C standard. When a display device that uses the general-purpose plug cable and has the standard terminal configuration is connected to the general-purpose connector, there is a problem that a circuit may malfunction or may be short-circuited due to a difference in the terminal configuration.

### SUMMARY OF THE INVENTION

One of the objects of the present invention is to improve prior art techniques and overcome at least some of the prior art problems as for instance above illustrated.

According to a first aspect of the present invention, it is provided an electronic device, comprising a connector including a plurality of terminals for being electrically connected to a peripheral device; a first determination component configured to determine whether or not a peripheral device compatible with the electronic device is connected to the connector, based upon an electrical state of a non-use terminal that is not used in a terminal configuration of the electronic device among the plurality of terminals; and a first switching component configured to be provided on a transmission line connecting a terminal of the plurality of terminals of the connector and an electric circuit of the electronic device, to electrically connect the transmission line when the first determination component determines that the peripheral device compatible with the own device is connected, and to electrically disconnect the transmission line when the first determination component determines that a non-compatible peripheral device is connected.

Optionally, in the electronic device according to the first aspect of the invention, the connector includes a pair of terminal groups disposed in a target so that the connector configured to be connected even though directions of a plug to be inserted into the connector are switched, further comprising a second determination component configured to determine a connection direction of the plug connected to the connector based upon an electrical state of a predetermined terminal provided in either one or both terminal groups of the pair of terminal groups; and a second switching component configured to be provided on the transmission line, and to selectively switch the terminal group connected to the electric circuit in response to the connection direction of the plug determined by the second determination component.

Optionally, in the electronic device according to the first aspect of the invention, the second determination component transmits a signal for detecting the connection direction to the predetermined terminal provided in either one or both terminal groups of the pair of terminal groups, and determines the connection direction of the plug connected to the connector based upon a reception result of a response signal corresponding to the signal at the terminal or the other terminal provided in the same terminal group different from the terminal.

Optionally, in the electronic device according to the first aspect of the invention, the second switching component is provided between the first switching component and the electric circuit.

Optionally, in the electronic device according to the first aspect of the invention, the peripheral device is a display device, the connector is a general-purpose connector having a common external shape with a connector for connecting a non-compatible general-purpose display device, and a terminal configuration of the connector is different from a terminal configuration of the general-purpose display device.

Optionally, in the electronic device according to the first aspect of the invention, the peripheral device is a liquid crystal display device.

Optionally, in the electronic device according to the first aspect of the invention, the peripheral device is a POS display device.

Optionally, in the electronic device according to the first aspect of the invention, the connector is a USB type C connector, an HDMI connector, or a Lightning connector.

Optionally, in the electronic device according to the first aspect of the invention, the connector is a USB type C connector.

Optionally, in the electronic device according to the first aspect of the invention, the connector has two terminals for being electrically connected to the peripheral device.

According to a second aspect of the present invention, it is provided a connection method, comprising determining whether or not a peripheral device compatible with an electronic device is connected to a connector including a plurality of terminals for being electrically connected to the peripheral device, based upon an electrical state of a non-use terminal that is not used in a terminal configuration of the electronic device among the plurality of terminals; electrically connecting a transmission line connecting a terminal of the plurality of terminals of the connector and an electric circuit of the electronic device when determining that the peripheral device compatible with the electronic device is connected; and electrically disconnecting the transmission line when determining that a non-compatible peripheral device is connected.

Optionally, in the connection method according to the second aspect of the invention, the connector includes a pair of terminal groups disposed in a target so that the connector configured to be connected even though directions of a plug to be inserted into the connector are switched, further comprising determining a connection direction of the plug connected to the connector based upon an electrical state of a predetermined terminal provided in either one or both terminal groups of the pair of terminal groups; and selectively switching the terminal group connected to the electric circuit in response to determining the connection direction of the plug.

Optionally, the connection method according to the second aspect of the invention further comprises transmitting a signal for detecting the connection direction to the predetermined terminal provided in either one or both terminal groups of the pair of terminal groups, and determining the connection direction of the plug connected to the connector based upon a reception result of a response signal corresponding to the signal at the terminal or the other terminal provided in the same terminal group different from the terminal.

Optionally, in the connection method according to the second aspect of the invention, the second switching component is provided between the first switching component and the electric circuit.

Optionally, in the connection method according to the second aspect of the invention, the peripheral device is a display device, the connector is a general-purpose connector having a common external shape with a connector for connecting a non-compatible general-purpose display device, and a terminal configuration of the connector is different from a terminal configuration of the general-purpose display device.

According to a third aspect of the present invention, it is provided a commodity sales device, comprising a connector including a plurality of terminals for being electrically connected to a POS display device; a first determination component configured to determine whether or not a POS display device compatible with the electronic device is connected to the connector, based upon an electrical state of a non-use terminal that is not used in a terminal configuration of the electronic device among the plurality of terminals; and a first switching component configured to be provided on a transmission line connecting a terminal of the plurality of terminals of the connector and an electric circuit of the electronic device, to electrically connect the transmission line when the first determination component determines that the POS display device compatible with the own device is connected, and to electrically disconnect the transmission line when the first determination component determines that a non-compatible POS display device is connected.

Optionally, in the commodity sales device according to the third aspect of the invention,
the connector includes a pair of terminal groups disposed in a target so that the connector configured to be connected even though directions of a plug to be inserted into the connector are switched, further comprising a second determination component configured to determine a connection direction of the plug connected to the connector based upon an electrical state of a predetermined terminal provided in either one or both terminal groups of the pair of terminal groups; and a second switching component configured to be provided on the transmission line, and to selectively switch the terminal group connected to the electric circuit in response to the connection direction of the plug determined by the second determination component.

Optionally, in the commodity sales device according to the third aspect of the invention, the second determination component transmits a signal for detecting the connection direction to the predetermined terminal provided in either one or both terminal groups of the pair of terminal groups, and determines the connection direction of the plug connected to the connector based upon a reception result of a response signal corresponding to the signal at the terminal or the other terminal provided in the same terminal group different from the terminal.

Optionally, in the commodity sales device according to the third aspect of the invention,
the second switching component is provided between the first switching component and the electric circuit.

Optionally, in the commodity sales device according to the third aspect of the invention,
the connector is a general-purpose connector having a common external shape with a connector for connecting a non-compatible general-purpose display device, and a terminal configuration of the connector is different from a terminal configuration of the general-purpose display device.

### DESCRIPTION OF THE DRAWINGS

FIG. 1 is an external perspective view illustrating an example of a commodity reading apparatus according to an embodiment;
FIG. 2 is a hardware block diagram of a motherboard;
FIG. 3 is a diagram illustrating an example of an external shape of a connector;
FIG. 4 is a comparison diagram of a terminal configuration of the connector and a terminal configuration of a general-purpose type;
FIG. 5 is a diagram illustrating a configuration example of a first switching control unit, a first switching unit, a second switching control unit, and a second switching unit;
FIG. 6 is a diagram illustrating a configuration example related to detection of a connection direction of a plug of the second switching control unit; and
FIG. 7 is a flowchart illustrating an example of an operation procedure of the commodity reading apparatus.

### DETAILED DESCRIPTION

According to one embodiment, there is provided an electronic device capable of preventing electrical connection between devices of connection destinations when connecting the devices having different terminal configurations of connectors.

In general, according to one embodiment, an electronic device includes a connector, a first determination unit, and a first switching unit. The connector includes a plurality of terminals for being electrically connected to a peripheral device. The first determination unit determines whether or not a peripheral device compatible with an own device is connected to the connector, based upon an electrical state of a terminal that is not used in a terminal configuration of the own device among the plurality of terminals. The first switching unit is provided on a transmission line connecting the terminal of the connector and an electric circuit of the own device, electrically connects the transmission line when the first determination unit determines that the peripheral device compatible with the own device is connected, and electrically disconnects the transmission line when the first determination unit determines that a non-compatible peripheral device is connected. According to another embodiment, a connection method involves determining whether or not a peripheral device compatible with an electronic device is connected to a connector including a plurality of terminals for being electrically connected to the peripheral device, based upon an electrical state of a non-use terminal that is not used in a terminal configuration of the electronic device among the plurality of terminals;
electrically connecting a transmission line connecting a terminal of the plurality of terminals of the connector and an electric circuit of the electronic device when determining that the peripheral device compatible with the electronic device is connected; and electrically disconnecting the transmission line when determining that a non-compatible peripheral device is connected.

Hereinafter, embodiments of an electronic device will be described in detail with reference to the accompanying drawings. In the embodiment described below, a peripheral device is used as a display device, and an application example of the electronic device and the display device to a point of sales (POS) device is shown.

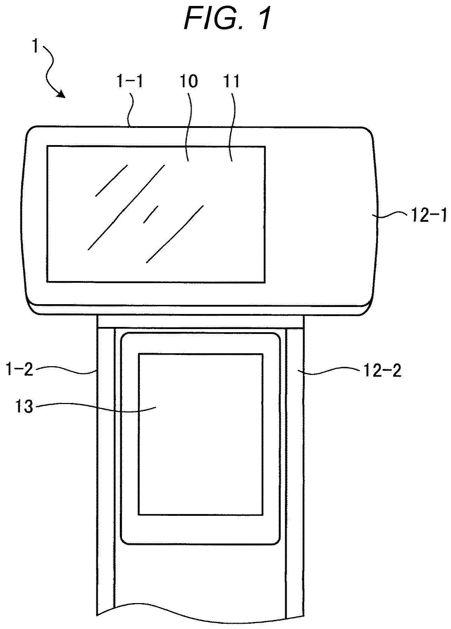

FIG. 1 is an external perspective view illustrating an example of a commodity reading apparatus. A commodity reading apparatus 1 is an example of a POS device, and includes a POS display device 1-1 and a main body unit 1-2 as illustrated in FIG. 1. The main body unit 1-2 corresponds to the "electronic device", and the commodity reading apparatus 1 corresponds to a "display apparatus". The POS display device 1-1 corresponds to a "peripheral device" or a "corresponding device" as one of the peripheral device and a "dedicated display device".

The POS display device 1-1 includes a display 10, a touch panel 11, a speaker, and the like. The POS display device 1-1 is electrically connected to the main body unit 1-2 by a general-purpose plug cable (not illustrated). An electric wire (a signal line) for transmitting various signals and an electric signal such as driving power is housed in the general-purpose plug cable. The POS display device 1-1 can be attached to and detached from the main body unit 1-2, and can be replaced with another display by removing and inserting the general-purpose plug cable.

The display 10 is a display such as a liquid crystal display, and displays various screen data on a display screen such as a liquid crystal according to a display signal from a control unit of the main body unit 1-2. For example, registration screen data in which a commodity selection button for registering a commodity by a touch input is disposed are displayed. For example, the touch panel 11 is a touch panel such as an electrostatic capacity system, and is provided on the display screen of the display 10. For example, when an operator touches the commodity selection button on the display screen, the touch panel 11 detects the touch operation of the operator and outputs a signal indicating coordinates on the display screen to the control unit of the main body unit 1-2.

The main body unit 1-2 includes a reading scanner 13 such as a laser scanner. The reading scanner 13 is a scanner for reading a barcode attached to a commodity.

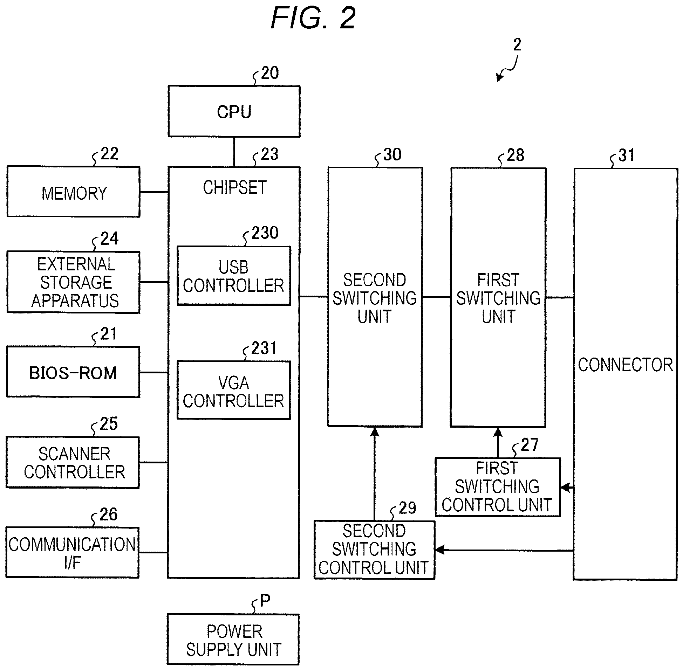

A housing (a second housing) 12-2 of the main body unit 1-2 houses a motherboard 2 (refer to FIG. 2) for controlling the whole commodity reading apparatus 1. The motherboard 2 is mounted with the control unit and a controller for each unit, for example, a controller for the POS display device 1-1. In the embodiment, a USB Type-C standard is adopted as an interface system for display signal processing. Therefore, a USB Type-C compliant connector is used for a connector 31 (refer to FIG. 2) as a receptacle on the side of the motherboard 2 and a connector as a receptacle on the side of the display device 1-1. A USB Type-C compliant general-purpose plug cable is used to connect a signal line between the connectors.

Next, a configuration of the motherboard 2 will be described. FIG. 2 is a hardware block diagram of the motherboard 2. The motherboard 2 illustrated in FIG. 2 includes a CPU 20, a BIOS-ROM 21, a memory 22, a chipset 23, an external storage apparatus 24, a scanner controller 25, a communication I/F 26, a first switching control unit 27, a first switching unit 28, a second switching control unit 29, a second switching unit 30, a connector 31, and a power supply unit P.

The CPU 20 is a central processing unit and executes various programs to generate data and output a control signal.

The BIOS-ROM 21 is a read only memory (ROM) that stores a basic input and output system (BIOS).

Thememory 22 is a random access memory (RAM) used as a work region of the CPU 20.

The chipset 23 is an example of an electronic circuit. The chipset 23 includes a north bridge and a south bridge, and performs memory control and control of an I/O device. In the embodiment, a USB controller 230 and a VGA controller 231 are mounted on the chipset 23. The USB controller 230 controls the touch panel 11 of a USB device (refer to FIG. 1), and processes an input signal from the touch panel 11. The VGA controller 231 generates display data, and outputs the display signal to the display 10 (refer to FIG. 1).

The external storage apparatus 24 is an HDD and a flash ROM, and stores a control program, commodity information for inquiring a commodity name, and screen data.

The scanner controller 25 is connected to the reading scanner 13 (refer to FIG. 1). The scanner controller 25 drives the reading scanner 13 to read barcode information.

The communication I/F 26 is a communication interface for transmitting the commodity information read by the commodity reading apparatus 1 to a POS register.

The first switching control unit 27 outputs a predetermined control signal to the first switching unit 28 in response to whether the display device connected to the connector 31 via the general-purpose plug cable is a non-compatible device of its own device or a compatible device thereof. For example, when the display device of the non-compatible device, which is not the POS display device 1-1 corresponding to the compatible device of its own device, is connected to the connector 31, the first switching control unit 27 outputs a control signal for controlling the first switching unit 28 to be "disconnected". When the POS display device 1-1 corresponding to the compatible device of its own device is connected to the connector 31, the first switching control unit 27 outputs a control signal for controlling the first switching unit 28 to be "connected". Hereinafter, a case where the display device of the non-compatible device is used as a USB Type-C compliant general-purpose display device is described as an example.

The first switching unit 28 electrically connects or disconnects a signal line between the motherboard and the display device of a connection destination by, for example, switching a switch circuit, based upon an input of the control signal from the first switching control unit 27.

The second switching control unit 29 outputs a control signal for switching a terminal group of the connector 31 connected to the chipset 23 to the second switching unit 30 in response to a connection direction of a plug of the general-purpose plug cable connected to the connector 31. As will be described later, since the USB Type-C compliant connector 31 does not distinguish between up and down, it is possible to connect the plug upside down. The second switching control unit 29 detects a direction of the plug connected to the connector 31, and outputs a control signal for switching the terminal of the connector 31 connected to the chipset 23 to the second switching unit 30 in response to the detected connection direction of the plug.

The second switching unit 30 selectively connects one of the pair of connection terminal groups provided in the connector 31 to the chipset 23 based upon the input of the control signal from the second switching control unit 29. The second switching unit 30 switches the connection terminal group to be connected to the chipset 23 by, for example, switching the switch circuit.

The connector 31 is a receptacle that complies with the USB Type-C standard and includes 24 terminals. A signal line such as a display signal, a touch panel control signal, and a power supply for a display device is connected to each terminal.

The power supply unit P appropriately performs voltage conversion on the electric power of a commercial power supply to supply the electric power to each unit. For example, the power supply unit P supplies the electric power for the display device to the POS display device 1-1 via the general-purpose plug cable.

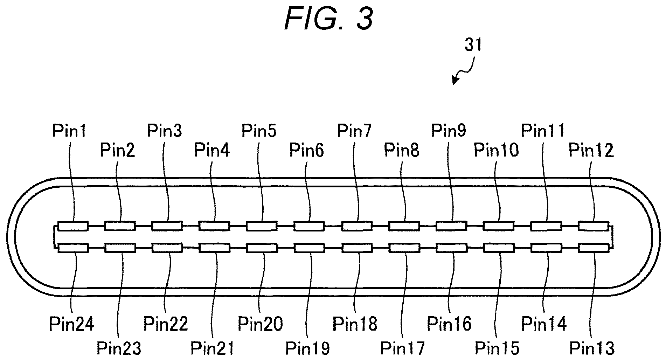

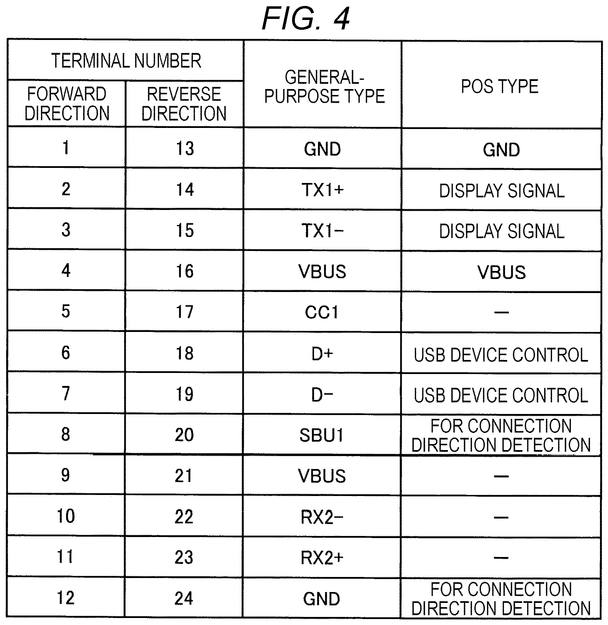

Next, a terminal configuration of the connector 31, that is, a terminal configuration of a POS type will be described with reference to FIGS. 3 and 4.

FIG. 3 is a diagram illustrating an example of an external shape of the connector 31 (including a shape of a terminal connection unit). FIG. 3 is a schematic front view of the terminal connection unit of the connector 31, and terminal numbers (Pin1 to Pin24) are added to positions of the respective terminals. The shape of the connector 31 illustrated in FIG. 3 complies with the USB Type-C standard. Therefore, the general-purpose plug cable used in the general-purpose display device can be used for the connector 31.

FIG. 4 is a comparison diagram of a terminal configuration of the connector 31 and a terminal configuration of a general-purpose type. In this example, as the terminal configuration of the general-purpose type, a terminal configuration of the general-purpose display device that complies with the USB Type-C standard is shown. FIG. 4 shows a list of terminal numbers of the terminals provided in the connector 31. A general-purpose type list showing an example of the terminal configuration of the general-purpose type and a POS type list showing an example of the terminal configuration of the POS type are shown in association with each terminal number of a terminal number list.

As illustrated in FIG. 3, the connector 31 of the USB Type-C standard includes a terminal group of "Pin1" to "Pin12" disposed at an upper stage and a terminal group of "Pin13" to "Pin24" disposed at a lower stage. Even though the upper and lower parts of the plug are switched and connected, these terminal groups are symmetrically disposed to be able to be connected to the same general-purpose type terminal.

Specifically, in the terminal configuration of the general-purpose type, "Pin1" and "Pin12" are terminals for ground (hereinafter abbreviated as GND). "Pin1" and "Pin12" correspond to "Pin13" and "Pin24". "Pin2" and "Pin3" are terminals for a data path (TX). "Pin2" and "Pin3" correspond to "Pin14" and "Pin15". "Pin 4" and "Pin 9" are terminals for bus power. "Pin 4" and "Pin 9" correspond to "Pin 16" and "Pin 21". "Pin 5" is a terminal for detecting a plug configuration. "Pin 5" corresponds to "Pin 17". "Pin6" and "Pin7" are terminals for a data path (USB 2.0). "Pin 6" and "Pin 7" correspond to "Pin 18" and "Pin 19". "Pin 8" is a terminal for a sideband. "Pin 8" corresponds to "Pin 20". "Pin 10" and "Pin 11" are terminals for a data path (RX). "Pin 10" and "Pin 11" correspond to "Pin 22" and "Pin 23".

That is, in the connector 31 of the USB Type-C standard, the terminal group of "Pin1" to "Pin12" and the terminal group of "Pin13" to "Pin24" form a pair of terminal groups that can be connected even though the directions of the plug are switched. In the following, a state in which the plug is connected to the terminal group of "Pin1" to "Pin12" is also referred to as a "forward direction", and a state in which the plug is connected to the terminal group of "Pin13" to "Pin24" is also referred to as a "reverse direction". The terminal group of "Pin1" to "Pin12" is also referred to as a "forward direction side", and the terminal group of "Pin13" to "Pin24" is also referred to as a "reverse direction side".

On the other hand, in the terminal configuration of the POS type, "Pin2" and "Pin3", or "Pin14" and "Pin15" are used for transmitting the display signal. In the terminal configuration of the POS type, "Pin6" and "Pin7", or "Pin18" and "Pin19" are used for controlling the USB device (the touch panel 11 in this example (refer to FIG. 1)). In the terminal configuration of the POS type, "Pin 1" or "Pin 13" is used for GND, and "Pin 4" or "Pin 16" is used for power supply to the display device 1-1.

In the terminal configuration of the POS type, "Pin8" and "Pin12" on the forward direction side or "Pin20" and "Pin24" on the reverse direction side are used for a connection direction detection for detecting whether the plug is connected to the forward direction side or the reverse direction side. A symbol "-" shown in a POS type list 32 indicates that Pin is not used in the POS type.

In this manner, in the terminal configuration of the POS type of the embodiment, "Pin5", "Pin9" to "Pin11", "Pin17", "Pin21" to "Pin23" are not used for electrical connection with the display device 1-1. Therefore, the main body unit 1-2 detects which one of the compatible device and the general-purpose display device that complies with the USB Type-C standard (the non-compatible device) is connected, based upon electrical states of the terminals of "Pin5", "Pin9" to "Pin11", "Pin17", "Pin21" to "Pin23". Hereinafter, the terminals of "Pin5", "Pin9" to "Pin11", "Pin17", and "Pin21" to "Pin23" are also collectively referred to as "monitor terminals".

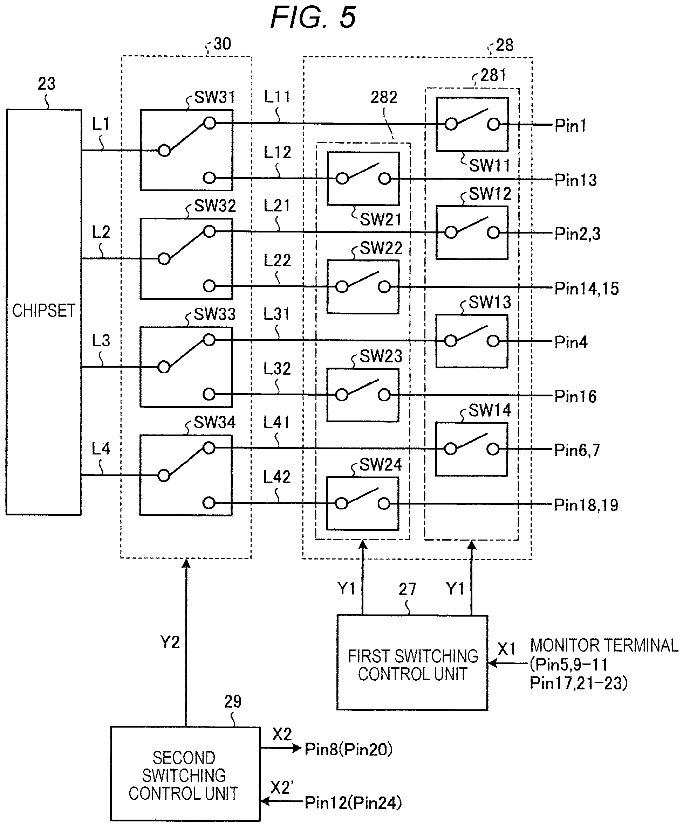

Next, a configuration example of the first switching control unit 27, the first switching unit 28, the second switching control unit 29, and the second switching unit 30 will be described. FIG. 5 is a diagram illustrating a configuration example of the first switching control unit 27, the first switching unit 28, the second switching control unit 29, and the second switching unit 30. Here, the first switching control unit 27 is an example of a first determination unit. The first switching unit 28 is an example of a first switching unit. The second switching control unit 29 is an example of a second determination unit. The second switching unit 30 is an example of a second switching unit. In FIG. 5, a plurality of sets of electric wires relating to various types of transmission are shown by one line.

As illustrated in FIG. 5, the first switching unit 28 includes a forward direction side switch 281 and a reverse direction side switch 282. The forward direction side switch 281 includes single-throw type switches SW11 to SW14 and is connected between the forward direction side terminal of the connector 31 and the second switching unit 30. Specifically, one end side of the switch SW11 is connected to "Pin1" of the connector 31, and the other end side of the switch SW11 is connected to a line L11 that connects the second switching unit 30 and the switch SW11. One end side of the switch SW12 is connected to "Pin2" and "Pin3" of the connector 31, and the other end side of the switch SW12 is connected to a line L21 that connects the second switching unit 30 and the switch SW12. One end side of the switch SW13 is connected to "Pin4" of the connector 31, and the other end side of the switch SW13 is connected to a line L31 that connects the second switching unit 30 and the switch SW13. One end side of the switch SW14 is connected to "Pin6" and "Pin7" of the connector 31, and the other end side of the switch SW13 is connected to a line L41 that connects the second switching unit 30 and the switch SW14.

The reverse direction side switch 282 includes single-throw type switches SW21 to SW24, and is connected between the reverse direction side terminal of the connector 31 and the second switching unit 30. Specifically, one terminal of the switch SW21 is connected to "Pin13" of the connector 31, and the other terminal is connected to a line L12 that connects the second switching unit 30 and the switch SW21. One terminal of the switch SW22 is connected to "Pin14" and "Pin15" of the connector 31, and the other terminal is connected to a line L22 that connects the second switching unit 30 and the switch SW22. One terminal of the switch SW23 is connected to "Pin16" of the connector 31, and the other terminal is connected to a line L32 that connects the second switching unit 30 and the switch SW23. One terminal of the switch SW24 is connected to "Pin18" and "Pin19" of the connector 31, and the other terminal is connected to the line L42 that connects the second switching unit 30 and the switch SW24.

The forward direction side switch 281 and the reverse direction side switch 282 switch on or off each switch in response to a control signal Y1 outputted from the first switching control unit 27, whereby the connector 31 and the second switching unit 30 (the chipset 23) are electrically connected or disconnected.

The first switching control unit 27 is connected to the monitor terminal of the connector 31. The first switching control unit 27 monitors a voltage value applied to the monitor terminal as an input signal X1 as the electrical state of the monitor terminal. The first switching control unit 27 is connected to the first switching unit 28 (the forward direction side switch 281 and the reverse direction side switch 282), and outputs the control signal Y1 for turning on or off all the switches of the first switching unit 28 in response to the input signal X1.

In the terminal configuration of the POS type used in the embodiment, as illustrated in FIG. 4, none of the monitor terminals is used. Therefore, when the POS display device 1-1 is connected to the connector 31, the voltage value at the monitor terminal becomes zero or almost zero. On the other hand, when the general-purpose display device is connected to the connector 31, a voltage value in response to a function of each terminal is applied to the monitor terminal as the input signal X1.

Next, the first switching control unit 27 determines whether or not the display device connected to the connector 31 is the POS display device 1-1 based upon the voltage value of the input signal X1, and outputs the control signal Y1 in response to the determination result to the first switching unit 28. Specifically, when the voltage value of the input signal X1 is zero or almost zero, the first switching control unit 27 determines that the POS display device 1-1 is connected, and outputs the control signal Y1 for turning on all the switches of the first switching unit 28. When the voltage value of the input signal X1 is equal to or greater than a threshold value which is greater than zero, the first switching control unit 27 determines that the general-purpose display device is connected, and outputs the control signal Y1 for turning off all the switches of the first switching unit 28.

Accordingly, when the general-purpose display device is connected to the connector 31, the first switching control unit 27 can disconnect the chipset 23 and the connector 31 so that the chipset 23 and the connector 31 are not electrically connected to each other. When the POS display devicel-1 is connected to the connector 31, the first switching control unit 27 can electrically connect the chipset 23 and the connector 31.

The first switching control unit 27 may be configured to monitor all of the monitor terminals, or may be configured to monitor some of the terminals. For example, the first switching control unit 27 may be configured to monitor Pin5 and Pin17 that are used for detecting the plug configuration with the general-purpose type among the monitor terminals.

The second switching unit 30 includes double-throw type switches SW31 to SW34, and is connected between the first switching unit 28 and the chipset 23. Specifically, two terminals on the switching side of the switch SW31 are connected to the line L11 of the switch SW11 and the line L12 of the switch SW21, and a remaining one terminal is connected to a line L1 that connects the chipset 23 and the switch SW31. Two terminals on the switching side of the switch SW32 are connected to the line L21 of the switch SW12 and the line L22 of the switch SW22, and a remaining one terminal is connected to a line L2 that connects the chipset 23 and the switch SW32. Two terminals on the switching side of the switch SW33 are connected to the line L31 of the switch SW13 and the line L32 of the switch SW23, and a remaining one terminal is connected to a line L3 that connects the chipset 23 and the switch SW33. Two terminals on the switching side of the switch SW34 are connected to the line L41 of the switch SW14 and the line L42 of the switch SW24, and a remaining one terminal is connected to a line L4 that connects the chipset 23 and the switch SW34.

The second switching unit 30 switches the connection destination to either one of the two terminals on the switching side in response to a control signal Y2 outputted from the second switching control unit 29, whereby the chipset 23 is electrically connected to the forward direction side or the reverse direction side of the connector 31.

The second switching control unit 29 is connected to Pin8 and Pin12 of the connector 31. The second switching control unit 29 detects (determines) the connection direction of the plug connected to the connector 31 based upon the electrical state of the Pin 12. Specifically, the second switching control unit 29 outputs an output signal X2 via Pin8, and receives an input of an input signal X2' corresponding to the output signal X2 via Pin12. Next, the second switching control unit 29 determines the connection direction of the plug to the connector 31 based upon a reception result of the input signal X2', and the control signal Y2 for switching all the switches of the second switching unit 30 to the forward direction side or the reverse direction side of the connector 31 is outputted in response to the connection direction.

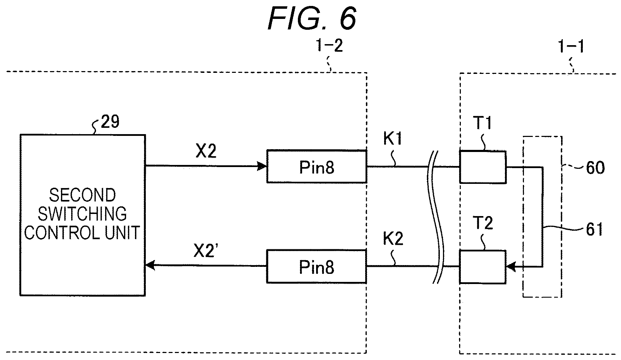

FIG. 6 is a diagram illustrating a configuration example relating to the detection of the connection direction of the plug of the second switching control unit 29. As described above, the second switching control unit 29 outputs the output signal X2 via "Pin8". The output signal X2 is inputted to a terminal T1 connected by the terminal "Pin8" and a signal line K1.

The POS display device 1-1 loops back the output signal X2 inputted to the terminal T1 to a terminal T2 connected to the terminal "Pin12" of the main body unit 1-2 by a signal line K2 by a loopback unit 60. The loopback unit 60 can be realized by, for example, connecting the terminal T1 and the terminal T2 of the POS display device 1-1 by a short-circuiting unit 61 such as a lead wire and pattern wiring.

According to the above-described configuration, when the plug is connected to the connector 31 in the forward direction, the output signal X2 is inputted to the terminal "Pin12" of the main body unit 1-2 as the input signal X2' by the above-described loopback unit 60. On the other hand, when the plug is connected to the connector 31 in the reverse direction, the terminals T1 and T2 of the display device 1-1 are connected to the terminals "Pin20" and "Pin24" of the main body unit 1-2, such that the output signal X2 is not transmitted to the display device 1-1 and the input signal X2' is not also looped back.

The second switching control unit 29 detects the connection direction of the plug connected to the connector 31 based upon whether or not the input signal X2' is looped back, and outputs the control signal Y2 in response to the detection result to the second switching unit 30. Specifically, when the input signal X2' is looped back, the second switching control unit 29 determines that the plug is connected to the forward direction side, and outputs the control signal Y2 for switching all the switches of the second switching unit 30 to the forward direction side of the connector 31. When the input signal X2' is not looped back, the second switching control unit 29 determines that the plug is connected to the reverse direction side, and outputs the control signal Y2 for switching all the switches of the second switching unit 30 to the reverse direction side of the connector 31.

In this manner, when the POS display device 1-1 is connected to the connector 31, the second switching control unit 29 switches the connection destination of the second switching unit 30 to the forward direction side or the reverse direction side in response to the connection direction of the plug. Accordingly, since the POS display device 1-1 and the chipset 23 are electrically connected to each other, it becomes possible to transmit an electric signal between the main body unit 1-2 and the POS display device 1-1.

In the embodiment, the second switching control unit 29 detects (determines) the connection direction of the plug by using "Pin 8" and "Pin 12" on the forward direction side, and may be configured to determine the connecting direction of the plug by using "Pin 20" and the "Pin 24" on the reverse direction side. The second switching control unit 29 outputs the output signal X2 to "Pin 8" on the forward direction side and "Pin 20" on the reverse direction side, and may determine the connection direction of the plug in response to whether the terminal receiving the input signal X2' is "Pin 12" on the forward direction side or "Pin 24" on the reverse direction side.

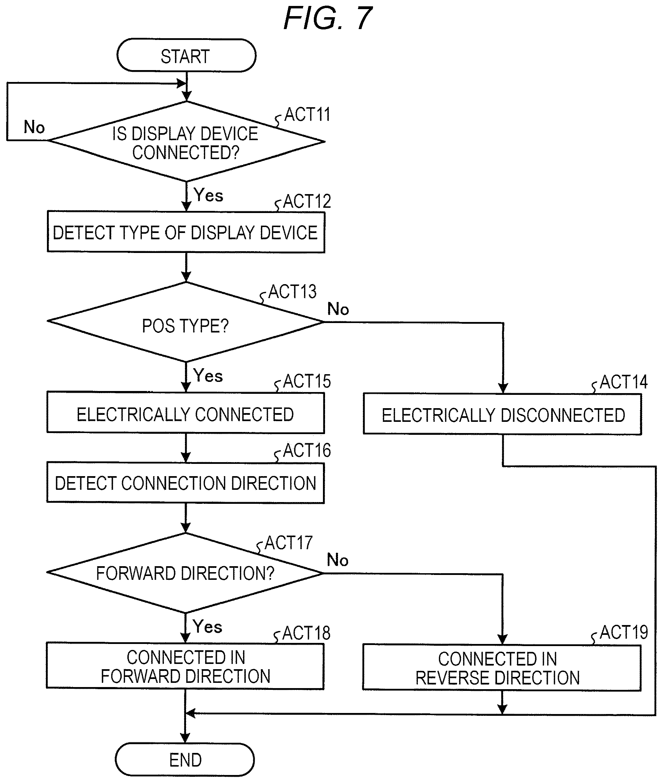

Hereinafter, an operation procedure of the commodity reading apparatus 1 when the main body unit 1-2 and the display device are connected by the general-purpose plug cable will be described. FIG. 7 is a flowchart illustrating an example of the operation procedure of the commodity reading apparatus 1.

First, the first switching control unit 27 waits until the display device is connected via the connector 31 (ACT 11: No). Here, the first switching control unit 27 outputs the control signal Y1 for turning off all the switches of the first switching unit 28 during the standby in ACT 11.

Next, when the display device is connected to the connector 31 of the main body unit 1-2 (ACT 11: Yes), the first switching control unit 27 determines whether the display device of the connection destination is a POS type display device or a general-purpose display device (a non-compatible display device) based upon a voltage value (the input signal X1) of the monitor terminal (ACT 12).

Here, when the display device of the connection destination is the general-purpose display device (ACT 13; No), the first switching control unit 27 outputs the control signal Y1 for turning off all the switches of the first switching unit 28. Accordingly, the first switching unit 28 electrically disconnects the general-purpose display device by turning off all the switches (ACT 14), and terminates this processing.

On the other hand, when the display device of the connection destination is the POS type display device (ACT 13; Yes), the first switching control unit 27 outputs the control signal Y1 for turning on all the switches of the first switching unit 28. Accordingly, the first switching unit 28 electrically connects the POS type display device by turning on all the switches (ACT 15).

Next, the second switching control unit 29 determines the connection direction of the plug connected to the connector 31 based upon the loopback (the input signal X2') of the output signal X2 outputted to the display device via "Pin8" (ACT 16).

Here, when the connection direction of the plug is the forward direction (ACT 17; Yes), the second switching control unit 29 connects all the switches of the second switching unit 30 to the forward direction side switch 281 of the first switching unit 28 (ACT 18), and terminates this processing. When the connection direction of the plug is the reverse direction (ACT 17; Yes), the second switching control unit 29 connects all the switches of the second switching unit 30 to the reverse direction side switch 282 of the first switching unit 28 (ACT 19), and terminates this processing.

As described above, in the main body unit 1-2, the type of the display device connected to the connector 31 is determined based upon the electrical state of the monitor terminal of the connector 31. When the POS type display device is connected to the connector 31, the main body unit 1-2 electrically connects a transmission line between the chipset 23 and the connector 31, and when the general-purpose display device is connected to the connector 31, the main body unit 1-2 electrically cut off the transmission line between the chipset 23 and the connector 31. Therefore, the main body unit 1-2 can prevent electrical connection with the device of the connection destination when connecting a device having a different terminal configuration of a connector.

When the POS type display device is connected to the connector 31 via the general-purpose plug cable, the main body unit 1-2 determines the connection direction of the plug connected to the connector 31 based upon the electrical state of a predetermined terminal (Pins 8 and 12 or Pins 20 and 24) provided in any one of the terminal groups among the pair of terminal groups provided in the connector 31. Next, the main body unit 1-2 switches the connection destination of the chipset 23 to the forward direction side or the reverse direction side of the connector 31 in response to the determined connection direction of the plug. Accordingly, when the POS type display device is connected to the connector 31, the main body unit 1-2 can electrically connect the chipset 23 and the POS type display device regardless of the direction of the plug. Therefore, it is possible to effectively utilize characteristics of the general-purpose plug cable that complies with the USB Type-C standard.

In the embodiment, as the terminal configuration of the POS type, a form using the terminal configuration illustrated in FIG. 4 is described, but the terminal configuration is not limited thereto. For example, when a sound output is performed by using a speaker provided in the display device, a terminal for the sound output may be secured.

In the embodiment, the first switching unit 28 switches the connection and disconnection of the transmission lines relating to Pins 1 to 4, Pins 6, and 7 (Pins 13 to 16 and Pins 18 and 19), but the transmission line to be connected and disconnected is not limited thereto. For example, when there is no electrical impact on mutual devices, the transmission line may be excluded from a target of the switching control. For example, Pin8 and Pin12 (Pin20 and Pin24) used for detecting the connection direction of the plug may be included in the target of the switching control.

In the embodiment, the connection direction is determined by using the two terminals of Pins 8 and 12 (or Pins 20 and 24), but the embodiment is not limited thereto. The connection direction may be determined by using any one of the terminals. In this case, when the POS type display device 1-1 receives the output signal X2 via a terminal set for the determination of the connection direction, the POS type display device 1-1 loops back and outputs the output signal X2 (the input signal X2') by using the terminal.

In the embodiment, a form in which the second switching unit 30 is provided between the chipset 23 and the first switching unit 28 is described, but the second switching unit 30 may be provided between the first switching unit 28 and the second switching unit 30. In this case, the second switching unit 30 connects the forward direction side of the connector 31 and the forward direction side switch 281 or the reverse direction side of the connector 31 and the reverse direction side switch 282 in response to the control signal Y2 of the second switching control unit 29.

In the embodiment, a form using the USB Type-C standard is described, but other standards may be used. For example, in the case of a Lightning (registered trademark) standard, in the same manner as that of the USB Type-C standard, since there is no distinction between the upper and lower parts of the connector portion and the upper and lower parts thereof can be connected upside down, the same configuration as that of the above-described embodiment can be applied.

In the embodiment, when the general-purpose display device is connected to the connector 31, the general-purpose display device is not displayed, such that a user can recognize the connected display device is the general-purpose display device, and a notification unit for explicitly notifying that the connected display device is the general-purpose display device may be further provided. For example, the main body unit 1-2 may include a sound output apparatus that emits a beep sound or a buzzer sound as the notification unit. In this case, the notification unit is configured to emit the beep sound or the buzzer sound in association with the switch-off control signal Y1 outputted from the first switching control unit 27 and the switch-off operation by the first switching unit 28, whereby the user can be notified that the general-purpose display device is connected thereto.

In the embodiment, an application example to the main body unit and the display device of the commodity reading apparatus is shown as the electronic device and the display device, but the embodiment is not limited thereto. This may be applied to other POS devices. For example, the electronic device and the display device may be applied to a main body unit and a display device of a POS register. Further, the electronic device and the display device may be applied to a main body unit and a display device of a self-POS. When the display device is required to connect two display devices, one device for a store clerk and the other device for a customer, the electronic device and the display device may be respectively applied to the main body unit and the display device for the store clerk, and the main body unit and the display device for the customer.

In the embodiment, the configuration of the main body unit and the display device is described by taking the USB Type-C standard as a connection interface as an example. However, a device other than the display device may be connected to the main body unit as a peripheral device, and the device may be expanded to one that identifies the non-compatible device at the time of connection.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. An electronic device, comprising:
a connector including a plurality of terminals for being electrically connected to a peripheral device;
a first determination component configured to determine whether or not a peripheral device compatible with the electronic device is connected to the connector, based upon an electrical state of a non-use terminal that is not used in a terminal configuration of the electronic device among the plurality of terminals; and
a first switching component configured to be provided on a transmission line connecting a terminal of the plurality of terminals of the connector and an electric circuit of the electronic device, to electrically connect the transmission line when the first determination component determines that the peripheral device compatible with the own device is connected, and to electrically disconnect the transmission line when the first determination component determines that a non-compatible peripheral device is connected.

2. The electronic device according to claim 1, wherein
the connector includes a pair of terminal groups disposed in a target so that the connector configured to be connected even though directions of a plug to be inserted into the connector are switched, further comprising:
a second determination component configured to determine a connection direction of the plug connected to the connector based upon an electrical state of a predetermined terminal provided in either one or both terminal groups of the pair of terminal groups; and
a second switching component configured to be provided on the transmission line, and to selectively switch the terminal group connected to the electric circuit in response to the connection direction of the plug determined by the second determination component.

3. The electronic device according to claim 2, wherein
the second determination component transmits a signal for detecting the connection direction to the predetermined terminal provided in either one or both terminal groups of the pair of terminal groups, and determines the connection direction of the plug connected to the connector based upon a reception result of a response signal corresponding to the signal at the terminal or the other terminal provided in the same terminal group different from the terminal.

4. The electronic device according to claim 2 or 3, wherein
the second switching component is provided between the first switching component and the electric circuit.

5. The electronic device according to any of claims 1 to 4, wherein
the peripheral device is a display device,
the connector is a general-purpose connector having a common external shape with a connector for connecting a non-compatible general-purpose display device, and
a terminal configuration of the connector is different from a terminal configuration of the general-purpose display device.

6. The electronic device according to any of claims 1 to 5, wherein
the peripheral device is a liquid crystal display device or a POS display device.

7. The electronic device according to any of claims 1 to 6, wherein
the connector is a USB type C connector, an HDMI connector, or a Lightning connector.

8. The electronic device according to any of claims 1 to 7, wherein
the connector has two terminals for being electrically connected to the peripheral device.

9. A connection method, comprising:
determining whether or not a peripheral device compatible with an electronic device is connected to a connector including a plurality of terminals for being electrically connected to the peripheral device, based upon an electrical state of a non-use terminal that is not used in a terminal configuration of the electronic device among the plurality of terminals;
electrically connecting a transmission line connecting a terminal of the plurality of terminals of the connector and an electric circuit of the electronic device when determining that the peripheral device compatible with the electronic device is connected; and
electrically disconnecting the transmission line when determining that a non-compatible peripheral device is connected.

10. The connection method according to claim 9, wherein
the connector includes a pair of terminal groups disposed in a target so that the connector configured to be connected even though directions of a plug to be inserted into the connector are switched, further comprising:
determining a connection direction of the plug connected to the connector based upon an electrical state of a predetermined terminal provided in either one or both terminal groups of the pair of terminal groups; and
selectively switching the terminal group connected to the electric circuit in response to determining the connection direction of the plug.

11. The connection method according to claim 10, further comprising:
transmitting a signal for detecting the connection direction to the predetermined terminal provided in either one or both terminal groups of the pair of terminal groups, and determining the connection direction of the plug connected to the connector based upon a reception result of a response signal corresponding to the signal at the terminal or the other terminal provided in the same terminal group different from the terminal.

12. The connection method according to any of claims 9 to 11, wherein
a second switching component is provided between a first switching component and the electric circuit, the first switching component electrically connecting the transmission line and the electric circuit.

13. The connection method according to any of claims 9 to 12, wherein
the peripheral device is a display device,
the connector is a general-purpose connector having a common external shape with a connector for connecting a non-compatible general-purpose display device, and
a terminal configuration of the connector is different from a terminal configuration of the general-purpose display device.

14. A commodity sales device, comprising:
a connector including a plurality of terminals for being electrically connected to a POS display device;
a first determination component configured to determine whether or not a POS display device compatible with the electronic device is connected to the connector, based upon an electrical state of a non-use terminal that is not used in a terminal configuration of the electronic device among the plurality of terminals; and
a first switching component configured to be provided on a transmission line connecting a terminal of the plurality of terminals of the connector and an electric circuit of the electronic device, to electrically connect the transmission line when the first determination component determines that the POS display device compatible with the own device is connected, and to electrically disconnect the transmission line when the first determination component determines that a non-compatible POS display device is connected.

15. The commodity sales device according to claim 14, wherein
the connector includes a pair of terminal groups disposed in a target so that the connector configured to be connected even though directions of a plug to be inserted into the connector are switched, further comprising:
a second determination component configured to determine a connection direction of the plug connected to the connector based upon an electrical state of a predetermined terminal provided in either one or both terminal groups of the pair of terminal groups; and
a second switching component configured to be provided on the transmission line, and to selectively switch the terminal group connected to the electric circuit in response to the connection direction of the plug determined by the second determination component.
